# EUROPÄISCHE PATENTSCHRIFT

(11) **EP 2 875 058 B1**
(45) Veröffentlichungstag und Bekanntmachung des Hinweises auf die Patenterteilung: **07.04.2021**
(21) Anmeldenummer: 13729925.1
(22) Anmeldetag: 07.06.2013
(51) Int. Cl.: C08G 18/76, C08G 18/48, D06N 3/00, C08G 18/22, D06N 3/14, C08G 18/08

(54) **VERBUNDSCHICHTMATERIAL, VERFAHREN ZU DESSEN HERSTELLUNG UND VERWENDUNG**
COMPOSITE SHEET MATERIAL, METHOD FOR THE PRODUCTION AND USE THEREOF
MATÉRIAU STRATIFIÉ, PROCEDE DE FABRICATION ET UTILISATION

(30) Priorität: 19.07.2012 DE 102012106557
(43) Veröffentlichungstag der Anmeldung: 27.05.2015
(73) Patentinhaber: Benecke-Kaliko AG, 30419 Hannover (DE)
(72) Erfinder: GERKEN, Andreas, 30161 Hannover (DE); BÜHRING, Jürgen, 30900 Wedemark (DE)
(74) Vertreter: Continental Corporation
(86) Internationale Anmeldenummer: PCT/EP2013/061777
(87) Internationale Veröffentlichungsnummer: WO 2014/012706

(56) Entgegenhaltungen:
- EP-A1- 1 696 073
- EP-A1- 2 476 800
- EP-A2- 1 059 379
- WO-A1-2011/138284
- DE-A1-102008 009 192

## Beschreibung

Die Erfindung betrifft ein Verbundschichtmaterial, aufweisend zumindest folgende Schichten: eine textile Trägerschicht, eine mit der textilen Trägerschicht verbundene Kaschierschicht, eine Polyurethanzwischenschicht auf Basis eines unblockierten High-Solid-Polyurethansystems und eine Polyurethandeckschicht. Ferner betrifft die Erfindung ein Verfahren zur Herstellung eines solchen Verbundschichtmaterials und die Verwendung des Verbundschichtmaterials.

Derartige Verbundschichtmaterialien sind beispielsweise aus der EP 1 059 379 B1 bekannt und werden z. B. als lederähnliche Bezugsmaterialien für unterschiedliche Einsatzzwecke verwendet.

Besondere Anforderungen werden an die lederähnlichen Bezugsmaterialien im Innenraum von Fahrzeugen gestellt.

Dekorative lederähnliche Bezugsmaterialien im Innenraum von Fahrzeugen, die dynamischen Belastungen ausgesetzt sind, müssen neben der geforderten Flexibilität in der Kälte und in der Wärme auch ausreichend gebrauchstüchtig für den Endnutzer sein. Das heißt, dass das Bezugsmaterial abriebbeständig, alterungsstabil und auch gut reinigbar sein muss. Dieses gilt insbesondere auch für Sitzbezugsmaterialien, die ständig dynamischen Belastungen ausgesetzt sind und sich ständig im Kontakt mit der Kleidung des Passagiers befinden. Durch die ständige Reibung zwischen Kleidung und Bezugsmaterial und durch die permanent wechselnden Druckbelastungen ist das Bezugsmaterial konstant einer hohen Beanspruchung ausgesetzt.

Eine starke Belastung erfahren Bezugsmaterialien im Sitzbereich eines Kraftfahrzeuges insbesondere an den Seitenwangen der Lehnen und der Sitzfläche an der jeweiligen Einstiegsseite, da das Sitzmaterial beim Einsteigen einer kombinierten hohen Druck- und Reibungsbelastung ausgesetzt ist. Kommt zusätzlich eine niedrige Umgebungstemperatur dazu, ist die Gefahr sehr groß, dass das Bezugsmaterial schon nach kurzer Zeit Risse oder andere Beschädigungen aufweist und der gesamte Sitzbezug erneuert werden muss.

Eine weitere Anforderung, die an Bezugsmaterialien gestellt wird, die im Fahrzeuginnenraum eingesetzt werden sollen, ist die Abwesenheit toxischer oder gesundheitsgefährdender Stoffe. Solche Substanzen dürfen nur unterhalb niedriger Grenzwerte enthalten sein und werden beispielsweise gemäß der VDA 278 nachgewiesen.

Die derzeit auf dem Markt erhältlichen Verbundschichtmaterialien, die als Bezugsmaterialien mit Lederoptik eingesetzt werden, erfüllen die vorgenannten Anforderungen in der Regel nicht auf Dauer.

So zeigt sich beispielsweise bei Bezugsmaterialien auf der Basis von PVC in den Zwischen- und Deckschichten im Sitzwangenbereich beim Ein- und Aussteigen ein konstanter oberflächlicher Abrieb von Weichmachern. Aus dem Inneren der PVC-Schichten migriert danach wieder Weichmacher an die Oberfläche, da sich wieder ein Gleichgewicht einstellt. So kann mit der Benutzungsdauer das PVC-Bezugsmaterial, welches im Ursprungszustand flexibel und insbesondere kälteflexibel ist, an Weichmachern verarmen und folglich verspröden. Das Bezugsmaterial wird dadurch weniger flexibel, insbesondere auch weniger kälteflexibel, wodurch die Gefahr von Rissbildung unter Belastung im Material steigt.

Alternative Bezugsmaterialien auf der Basis von koagulierten Polyurethanen, wie beispielsweise Alcantara® zeigen häufig den Nachteil, dass sie im Sitzwangenbereich nicht ausreichend abriebstabil sind. Ferner zeigen solche Bezugsmaterialien in der Anwendung oft ein nicht akzeptables Anschmutz- und Reinigungsverhalten. Außerdem werden derartige Bezugsmaterialien mit Hilfe von umweltbelastenden Verfahren hergestellt, da bei der Produktion große Mengen an toxischem N,N-Dimethylformamid verwendet werden.

Andere Bezugsmaterialien verwenden Polyurethane auf Basis von blockierten Isocyanaten. Dabei werden in der Regel zur Herstellung der Bezugsmaterialien toxische Diamine und mit Butanonoxim blockierte Isocyanat-Präpolymere eingesetzt. Die Isocyanate spalten bei der Herstellung des Bezugsmaterials bei Erwärmung das reproduktionstoxische Butanonoxim ab, welches jedoch in signifikanten Mengen im Bezugsmaterial verbleibt und die nutzende Person, die insbesondere bei Sitzanwendungen ständig im Kontakt mit dem Bezugsmaterial steht, gefährdet.

Weitere Bezugsmaterialien auf Basis einer Kombination von Polyurethanfilmen, die aus in Lösemitteln gelösten Polyurethanen und sogenannten lösemittelarmen oder lösemittelfreien High-Solid-Polyurethansystemen - vertrieben beispielsweise von der Firma Bayer - gebildet werden, sind in der Regel nicht ausreichend in der Kälte (beispielsweise bei -10 °C) flexibel, da insbesondere die aus dem in Lösemittel gelösten Polyurethan aufgebauten Schichten keine ausreichend tiefe Glasübergangstemperatur besitzen. Alternative Polyurethan-Lösemittelsysteme mit niedrigen Glasübergangstemperaturen sind wiederum zu weich und somit zu wenig abriebstabil.

Polyurethandispersionen zur Beschichtung von textilen Materialien sind z.B. bekannt aus der WO 2011/138284 A1, der DE 10 2008 009192 A1 und der EP1 696 073 A1.

Kommerziell ist derzeit kein Bezugsmaterial erhältlich, welches gleichzeitig abriebstabil, kälteflexibel und im Wesentlichen frei von Weichmachern und toxischen Lösemitteln ist. Der Erfindung liegt die Aufgabe zu Grunde, ein Verbundschichtmaterial bereit zu stellen, welches sich bei Nutzung als Bezugsmaterial durch eine hohe Gebrauchstüchtigkeit auszeichnet und eine möglichst geringe Toxizität aufweist.

Gelöst wird die Aufgabe dadurch, dass die Polyurethandeckschicht des eingangs genannten Verbundschichtmaterial auf einer lösemittelfreien, wässrigen Polyurethandispersion, die im dispergierten Polymer zumindest partiell Polyethergruppen enthält, basiert.

Die Polyurethandeckschicht basiert demnach vollständig auf einer lösemittelfreien, wässrigen Polyurethandispersion, die im dispergierten Polymer zumindest partiell Polyethergruppen enthält.

Das Verbundschichtmaterial kann weitere Schichten, wie beispielsweise weitere Polyurethanschichten innerhalb des Verbundes oder weitere auf der Polyurethandeckschicht aufgebrachte Lackschichten, aufweisen.

Es hat sich überraschenderweise herausgestellt, dass das erfindungsgemäße Verbundschichtmaterial hervorragend als Bezugsmaterial eingesetzt werden kann, welches sich durch eine hohe Haltbarkeit auszeichnet. Das Verbundschichtmaterial ist besonders abriebstabil und kälteflexibel, wobei die Abriebbeständigkeit z. B. mit Sattelabriebprüfungen und die Kälteflexibilität z. B. mit einer so genannten Ballyfexprüfung (DIN 53351) nachgewiesen werden können. Es ist dabei für die Kälteflexibilität notwendig, dass das dispergierte Polyurethanpolymer Polyethergruppen enthält.

Aus toxischer Sicht weist das Verbundschichtmaterial wegen der Verwendung von lösemittelfreien Polyurethandispersionen eine verringerte Gefahr auf, da weniger bzw. gar keine flüchtigen Substanzen im Verbundschichtmaterial enthalten sind. Der Nachweis auf flüchtige Substanzen kann dabei über eine Prüfung nach VDA 278 (VOC- und Fog-Wert) erfolgen.

Zusätzlich lässt sich mit dem erfindungsgemäßen Verbundschichtmaterial ein Material erzielen, welches die Anforderungen der Automobilindustrie an ein Bezugsmaterial für den automobilen Innenraum erfüllt, d. h., dass auch bei Verstreckung und Verpolsterung des Verbundschichtmaterials die textile Struktur der textilen Trägerschicht nicht auf der Oberfläche sichtbar wird und die sichtbare Oberfläche durch UV-Bestrahlung im Wesentlichen nicht verfärbt wird.

Um die Umweltverträglichkeit des Verbundschichtmaterials weiter zu verbessern und die Toxizität zu verringern, hat es sich als vorteilhaft erwiesen, wenn die Polyurethandeckschicht frei von Co-Lösern ist.

Co-Löser sind häufig eingesetzte Inhaltsstoffe in Polyurethandispersionen. Es handelt sich dabei in der Regel um wasserverdünnbare, hochsiedende organische Lösemittel wie N-Methylpyrrolidon oder N-Ethylpyrrolidon, die als organische Anteile während der Lebensdauer des Verbundschichtmaterials emittieren (VOC) und häufig eine Gesundheits- und Umweltgefährdung darstellen.

Vorzugsweise ist die Glasübergangstemperatur der Polyurethandeckschicht (ausgehärteter Film) kleiner als -40 °C, besonders bevorzugt kleiner als -50 °C.

Gemäß einer vorteilhaften Weiterbildung der Erfindung basiert die Polyurethandeckschicht zumindest teilweise auf einer aliphatischen Polycarbonatesterpolyetherpolyurethan-Dispersion. Diese Polyurethantypen führen zu besonders hoher Abriebbeständigkeit und hoher Kälteflexibilität. Derartige Polycarbonatesterpolyetherpolyurethan-Dispersion sind beispielsweise unter dem Namen Impranil® DLU von der Firma Bayer Material Science auf dem Markt erhältlich.

Zur weiteren Reduzierung der flüchtigen Kohlenwasserstoffe (VOC) bei der Herstellung und im Endprodukt ist es außerdem von Vorteil, wenn auch die Kaschierschicht und/oder die Polyurethanzwischenschicht auf im Wesentlichen lösemittelfreien Ausgangssubstanzen basieren.

Die Polyurethanzwischenschicht bzw. die Polyurethanzwischenschichten auf Basis eines unblockierten High-Solid-Polyurethansystems wird bzw. werden vorzugsweise unter Verwendung unblockierter Isocyanat-Präpolymere, Polyolen, ggf. Polyaminen und einem Katalysator (beispielsweise beschrieben in EP 1 059 379 B1 oder in DE 10 2006 056 956 A1) aufgebaut, wobei der Katalysator bei der Herstellung und Lagerung der reaktiven Massen eine lange Verarbeitungszeit (Topfzeit) ermöglicht und bei Tempern in einem Ofen eine schnelle Aushärtung zu einem Polymerfilm. Vorzugsweise enthalten diese Systeme keine Lösemittel.

Die in der Zwischenschicht eingesetzten Isocyanat-Präpolymere sind in der Regel aufgebaut aus Polyolen und Isocyanaten auf Basis beispielsweise von Hexamethylendiisocyanat (HDI), Isophorondiisocyanat(IPDI), Dicyclohexylmethan-4,4'-Diisocyanat (HMDI), 2-Methylpentandiisocyanat (MPDI), 2,2,4-Trimethylhexamethylendiisocyanat/2,4,4-Trimethyl-hexanethylendiisocyanat (TMDI), Norbornandiisocyanat (NBDI), Methylendiphenyldiisocyanat (MDI), Diisocyanatomethylbenzen, insbesondere auch das 2,4- und das 2,6-Isomere und technische Gemische beider Isomeren (TDI), Tetramethylxylylendiisocyanat (TMXDI) und Naphthylendiisocyanat (NDI) oder Derivate aus diesen Isocyanaten wie z. B. Isocyanurate, Uretdione, Allophanate und/oder Biurete, wobei insbesondere aromatische Isocyanat-Präpolymere auf Basis von MDI, TDI, TMXDI oder NDI bevorzugt sind. Polyurethane auf dieser aromatischen Basis sind im Vergleich zu aliphatischen Polyurethanen kostengünstiger. Sind die erfindungsgemäßen Konstruktionen jedoch besonderen Licht-, UV- und/oder Wärmebelastungen ausgesetzt, sind die aliphatischen Polyurethan-Ausgangsstoffe zu bevorzugen.

Die Polyurethanzwischenschicht kann kompakt sein. Um bei einem Verbundmaterial bei Verwendung sehr dehnfähiger Textilien wie beispielsweise einem PET-basierenden Fang-Krepp-Gestrick mit einem Flächengewicht von 120 g/m² jedoch die Sichtbarkeit der textilen Struktur auf der Oberfläche zu vermeiden und um eine angenehmere Eindruckhaptik zu erzeugen, ist die Polyurethanzwischenschicht vorzugsweise geschäumt. Dies kann durch ein durch die Zugabe eines Mittels erreicht werden, welches unter Wärmeeinwirkung aufschäumt, so dass im ausgehärteten Zustand ein Film mit kleinzelligen, gleichmäßig verteilten Schaumblasen entsteht. Desweiteren werden die Ausgangsstoffe zur Bildung des Polyurethanfilms so gewählt werden, dass die Glasübergangstemperatur dieses Films (gemessen in einer DSC-Messung bei einer Aufheizrate von 10 °C/min) kleiner als -40 °C und bevorzugt kleiner als -50 °C ist.

Bei der textilen Trägerschicht kann es sich z. B. um Nadel- oder Wasserstrahlvliese, Gewirke, Gestricke, Gewebe, Abstandsgewirke, senkrechte Polfäden enthaltende Vliese (z. B. Multiknit oder Optiknit) handeln. Die Flächengewichte betragen üblicherweise 50 bis 500 g/m². Als Basis der Fäden können beispielsweise folgende Materialien zum Einsatz kommen: Mischungen aus Baumwolle und Polyester (in der Regel auf der Basis von Polyethylenterephthalat), Lyocell, Polyamide, Polyethylenterephthalat, Polyacrylate, Aramide.

Gemäß einer vorteilhaften Weiterbildung der Erfindung enthält die textile Trägerschicht flammgeschützte Textilien, um eine hohe Flammbeständigkeit zu erzielen. Als solche flammgeschützten Textilien können dann entweder solche eingesetzt werden, die mit Flammschutzmittel ausgerüstet sind, oder es werden solche eingesetzt, die üblicherweise schon schwerer entflammbar sind, z. B. Textilien auf Basis von nicht mit Flammschutzmitteln ausgerüstetem Polyethylenterephthalat. Bei letzteren enthalten deren textile Fäden schon flammschützende Einheiten in den Polymerketten oder es handelt sich um Textilien auf Basis flammhemmender aromatischer Polyamide (z. B. Kevlar®, Nomex®) oder anderer flammhemmender Polymere (beispielsweise Lenzing FR®, Basofil®, Twaron®, Kermel®, BelcoTex®, Pyron®, Trevira CS®, Polysulfonamid (Tanlon®), Polyphenylensulfid). Einsetzbar sind auch Textilien auf Basis von Glasfasern, Mineralfasern, Metallfäden oder Polymerfäden, die metallische Anteile enthalten.

Die textile Trägerschicht wird mit einer Kaschiermasse, die die Kaschierschicht bildet, mit der nachfolgenden Schicht verbunden. Die Kaschiermasse dringt dabei weitestgehend in die textile Trägerschicht ein und bildet die Verbindung zu der nachfolgenden Lage/Schicht. Für die auf die textile Trägerschicht aufgebrachte Kaschierschicht wird als Kaschiermasse oftmals ein lösemittelhaltiger Kaschierkleber verwendet, der durch Verdampfen des Lösemittels aushärtet. Bevorzugt werden jedoch lösemittelfreie und Co-Löser-freie wässrige Dispersionskaschiermassen, insbesondere auf Basis von Polyurethanen verwendet. Alternativ dazu können auch so genannte thermoplastische Hotmeltkleber eingesetzt werden. Das können beispielsweise über Streuverfahren aufgebrachte thermoplastische Pulver wie Polyester oder Polyamide oder über eine Breitschlitzdüse oder Druckwalze aufgebrachte thermoplastische Filme sein. Angewandt werden auch Verfahren wie Sprühen aus Düsen oder Verfahren unter Verwendung einer rotierenden Austrittsdüse. Es können dabei auch reaktive thermoplastische Kaschierkleber verwendet werden, die nach erfolgter Applikation und Erstarrung unter Einwirkung von Umgebungsfeuchtigkeit vernetzen. Möglich ist auch die Verwendung thermoplastischer offener Klebewebs oder von Textilien, die aufgebrachte thermoplastische Elemente beispielsweise in Form einer Punktdotierung als Kaschierschicht enthalten. Eine weitere Möglichkeit der Kaschierung ist der Einsatz von High-Solid-Polyurethanmassen wie sie auch für die Zwischenschicht verwendet werden, die insbesondere zur Kaschierung von Vliesen verwendet werden können.

Gemäß einer weiteren vorteilhaften Weiterbildung der Erfindung weist das Verbundschichtmaterial auf der Polyurethandeckschicht nach außen weisend weitere Lackschichten auf. Dies dient der Verbesserung der Gebrauchstüchtigkeit, insbesondere im Hinblick auf die Abriebeigenschaften, die Kratzfestigkeit, das Reinigungsverhalten, die Beständigkeit gegen Wasch- und Lösemitteln, den Glanzgrad, die Farbe und/oder die Alterungseigenschaften. Die Lackschichten können auf lösemittelhaltigen oder wässrigen Polyurethan- und/oder Acrylatsystemen basieren, die über übliche Druckverfahren z. B. im direkten oder indirekten Raster-Tiefdruck oder Reverse Roller Coating appliziert werden können.

Vorzugsweise ist zumindest eine der Lackschichten vernetzt. Für derartige vernetzte Lackschichten eignen sich insbesondere über elektromagnetische Strahlung vernetzende Systeme (UV-Licht-Vernetzung, Elektronenstrahlvernetzung) oder thermisch bzw. über chemische Reaktionen vernetzende Systeme wie Isocyanat- oder Carbodiimid-vernetzende Polyurethansysteme.

Für eine verbesserte Verklebbarkeit des Verbundschichtmaterials und zur besseren Verarbeitung in nachfolgenden Arbeitsschritten kann auch die Unterseite des Verbundschichtmaterials, d.h. der textile Träger auf der der Kaschierschicht abgewandten Seite mit zumindest einer Lack-, Haft- oder Primerschicht und/oder mit weiteren Schichten (beispielsweise Polyurethanschäume für eine bessere Verpolsterbarkeit oder dünne Folien aus beispielsweise thermoplastischem Polyurethan für die Verarbeitung in Hinterspritz- oder Hinterschäumverfahren) versehen werden.

Aus ästhetischen Gründen kann die für den Kunden sichtbare Oberfläche des Verbundschichtmaterials, d. h. die Polyurethandeckschicht mit den ggf. vorhandenen Lackschichten, mit einem Druck (z. B. Bilder, Muster) versehen werden. Zusätzlich kann die Oberfläche mit einer Struktur und/oder transparenten Lackschichten und/oder transparenten Folienschichten versehen werden.

In allen Schichten des erfindungsgemäßen Verbundschichtmaterials können Hilfsmittel und Additive wie Gleitmittel, Rheologiehilfsmittel, Verdicker, Flammschutzmittel, Stabilisatoren gegen oxidativen, thermischen, hydrolytischen, strahlungsinduzierten oder mikrobiellen Abbau oder Alterung, Trennmittel, Pigmente, Verstärkungsstoffe, Füllstoffe oder Treibmittel eingesetzt werden. Solche Hilfsmittel und Additive sind beispielsweise beschrieben in H. Zweifel, Plastics Additives Handbook, 5. Auflage. Carl Hanser Verlag, München.

Für eine besonders gute Flexibilität und Verarbeitbarkeit des Verbundschichtmaterials weisen die einzelnen Schichten vorzugsweise folgende Schichtdicken auf:
Kaschierschicht: 1 bis 400 µm, bevorzugt 10 bis 200 µm
Polyurethanzwischenschicht: 50 bis 1000 µm, bevorzugt 150 bis 750 µm
Polyurethandeckschicht: 10 bis 200 µm, bevorzugt 20 bis 150 µm
Lackschicht: 1 bis 100 µm, bevorzugt 3 bis 20 µm.

Die üblichen Flächengewichte für die einzelnen Schichten betragen:
textile Trägerschicht: 50 bis 500 g/m²
Polyurethanzwischenschicht(en): 100 bis 800 g/m² (trocken)
Polyurethandeckschicht: 10 bis 200 g/m² (trocken)
Lackschicht: 1 bis 100 g/m² (trocken)

Das erfindungsgemäße Verbundschichtmaterial kann ausgehend vom Textil durch schichtweises Auftragen (beispielsweise Rakeln mit einem Messer oder Drucken) und nachfolgendes thermisches Aushärten aufgebaut werden, wobei das hergestellte Verbundschichtmaterial nachfolgend in der Regel geprägt wird. Bevorzugt erfolgt die Herstellung jedoch über ein Umkehrbeschichtungsverfahren (s. a. Ullmann's Encyclopedia of Industrial Chemistry, 6th ed., Wiley-VCH, Weinheim 2002, Kapitel "Leather Imitates" von C. Zürbig und H.-H. Kruse). Dabei wird in einem kontinuierlichen Verfahren auf einen Träger (beispielsweise auf Basis von Papier oder einem Polymeren, wie Polyolefinen oder Silikonen), der die negative Oberflächenstruktur des späteren Bezugsmaterials besitzt, zuerst die Polyurethanmasse für die Polyurethandeckschicht mittels eines Messerrakels aufgetragen und nachfolgend in einem Ofen thermisch zu einem Film ausgehärtet. Danach erfolgt wiederum mit einem Messerrakel der Auftrag der Polyurethan-High-Solid-Masse für Zwischenschicht, die wiederum im Ofen ausgehärtet wird. Danach kann beispielsweise über ein Messerrakel, eine Breitschlitzdüse, eine Sprühdüse oder eine Druckwalze eine Kaschiermasse aufgebracht werden, in die ein textiler Träger eingelegt wird. Anschließend wird die aufgetragene Schicht wieder im Ofen getrocknet, wodurch sich der textile Träger dauerhaft mit der restlichen Konstruktion verbindet, und man trennt zuletzt den ggf. strukturierten Träger vom hergestellten Verbundschichtmaterial. Das Verbundschichtmaterial wird nachfolgend über übliche Druckverfahren zur Einstellung der Eigenschaften wie Haptik, optisches Erscheinungsbild, Glanzgrad, Abrieb- und Knarzbeständigkeit und Anschmutz- und Reinigunsverhalten mit einer oder in der Regel mehreren Lackschichten versehen. Das gesamte Verbundschichtmaterial kann dann in üblichen Kaschierverfahren wie beispielsweise einer Flammkaschierung weiter verarbeitet werden.

Das erfindungsgemäße Verbundschichtmaterial ist sowohl im modisch technischen Bereich (Schuhe, Taschen, Bekleidung usw.) als auch in sonstigen Bereichen, wo beschichtete Textilien eingesetzt werden, verwendbar. Durch die Vermeidung von toxischen Substanzen bestehen hinsichtlich eines direkten Kontaktes mit menschlicher Haut keine Bedenken. Die hohe Flexibilität und Abriebbeständigkeit macht das Verbundschichtmaterial besonders geeignet für Schuhmaterialien.

Vorzugsweise wird das erfindungsgemäße Verbundschichtmaterial als dekoratives Innenraummaterial z. B. im Transportwesen, Schiffbau, bei Möbeln usw. verwendet, insbesondere als oberflächenstrukturierte Bezugsmaterialien. Die vorteilhaften Eigenschaften des Verbundschichtmaterials kommen dann zum Tragen, wenn sie in Bereichen eingesetzt werden, die mit der bekleideten oder unbekleideten menschlichen Haut in Berührung kommen und zugleich dynamischen Belastungen ausgesetzt sind. Dieses können Schaltbälge, Lenkradabdeckungen, Türbrüstungen, Armablagen, Rückenlehnen, Kopfstützen und insbesondere alle Arten von Sitzen im oder außerhalb des Automobils sein.

Ein weiteres mögliches Einsatzgebiet des Verbundschichtmaterials betrifft für Sportgeräte, wo hohe Flexibilität und hohe Abriebbeständigkeit gefordert werden, wie beispielsweise bei Fußbällen.

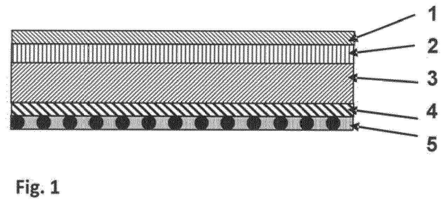

Die Erfindung wird nun anhand von Beispielen näher erläutert. Dabei zeigt die einzige Figur 1 schematisch ein erfindungsgemäßes Verbundschichtmaterial mit einer textilen Trägerschicht 5, einer darauf aufgebrachten Kaschierschicht 4 mit einer Schichtdicke von 1 bis 400 µm, einer Polyurethanzwischenschicht 3 auf Basis eines unblockierten High-Solid-Polyurethansystems mit einer Schichtdicke von 50 bis 1000 µm, einer Polyurethandeckschicht 2 mit einer Schichtdicke von 10 bis 200 µm und einer äußeren Lackschicht 1 mit einer Schichtdicke von 1 bis 100 µm. Die Polyurethandeckschicht 2 basiert dabei zumindest teilweise auf einer lösemittelfreien, wässrigen Polyurethandispersion, die im dispergierten Polymer zumindest partiell Polyethergruppen enthält.

Anhand von Vergleichs- und Ausführungsbeispielen mit dem Schichtaufbau gemäß der Figur wurden Verbundschichtmaterialien erzeugt, die sich nur in der chemischen Zusammensetzung der Polyurethandeckschicht 2 unterschieden. Die anderen Schichten waren bei allen Materialien, die in der folgenden Tabelle 1 dargestellt sind, identisch und wie folgt zusammengesetzt:
**Lackschicht 1** auf Basis von PERMUTHANE SU-9517 (Firma. Stahl, Deutschland), PERMUTEX WF-73-549 (Firma. Stahl, Niederlande) und BAYHYDROL UH XP 2648 (Firma Bayer Material Science, Deutschland)
**Polyurethanzwischenschicht 3:** 500 g Poly(oxypropylen)triol (Mw = 6000 g/mol), 610 g Poly(oxypropylen)diol (Mw = 4000 g/mol), 400 g MDI (Methylendiphenyldiisocyanatoligomer) (Mw = 1200 g/mol), 10 g Nickelacetylacetonat 10 %ig in Poly(oxypropylen)glykol (Zusammensetzung entspricht dem Beispiel 1 der EP 1 059 379 B1)
**Kaschierschicht 4:** MDI-Polyester-TPU gelöst in MEK (Gew.-verhältnis 3:7)
**textile Trägerschicht 5:** Gestrick auf Basis von Baumwolle/Polyethylenterephthalatfasern (35/65 Gew.-%) mit einem Flächengewicht von 140 g/m² (Firma Reichenbach, Deutschland)

Die Polyurethandeckschichten 2 waren wie folgt zusammengesetzt und hergestellt:

### Vergleichsbeispiel 1:

1000 g Impranil ELH A (Polyurethan, Lösemittelbasis:
Toluol/Methoxypropanol/Isopropanol, Firma Bayer Material Science, Deutschland) wurden mit einem Messerrakel in einer Stärke von 180 µm auf einen genarbten Träger aufgetragen und nachfolgend 2 min bei 80 °C und 2 min bei 120 °C getrocknet.

### Vergleichsbeispiel 2:

1000 g Larithane HS 969 (Butanonoximblockiertes High-Solid-Präpolymer mit Diamin-Vernetzer, Firma Novotex, Italien) wurden mit 71 g 4,4-Diamino-3,3-dimethyldicyclohexylmethan (Firma BASF, Deutschland) mittels eines Flügelrührers homogen vermischt und in einer Stärke von 200 µm auf einen genarbten Träger mit einem Messerrakel aufgetragen und nachfolgend 4 min bei 160 °C ausgehärtet.

### Vergleichsbeispiel 3:

1000 g aliphatische, Polyester-Polycarbonat basierende anionische, wässrige Polyurethandispersion wurden mit einem Messerrakel in einer Stärke von 180 µm auf einen genarbten Träger aufgetragen und nachfolgend 2 min bei 80 °C und 2 min bei 100 °C getrocknet.

### Vergleichsbeispiel 4:

1000 g Polycarbonatdiol mit einer Molmasse 2000 g/mol und
1256 g IPDI-Polytetramethylenglykol-Präpolymer mit 8 Massen-% freien NCO-Gruppen (Einsatz im Überschuss: Index 1,22) als High-Solid-Polyurethansystem und 7 g Dioctyl-zinn-bis-(isooctylmercaptoacetat) wurden mit einem Flügelrührer homogen vermischt und in einer Stärke von 200 µm auf einen genarbten Träger mit einem Messerrakel aufgetragen und nachfolgend 4 min bei 160 °C ausgehärtet.

### Beispiel 1

1000 g wässrige, aliphatische Polycarbonatesterpolyether-polyurethandispersion wurden mit einem Messerrakel in einer Stärke von 150 µm auf einen genarbten Träger aufgetragen und nachfolgend 2 min bei 80 °C und 2 min bei 100 °C getrocknet.

### Beispiel 2

750 g wässrige, aliphatische Polycarbonatesterpolyether-polyurethandispersion wurden mit 250 g wässrige, aliphatische Polycarbonatpolyurethandispersion homogen vermischt und mit einem Messerrakel in einer Stärke von 150 µm auf einen genarbten Träger aufgetragen und nachfolgend 2 min bei 80 °C und 2 min bei 100 °C getrocknet.

Die auf diese Weise erzeugten Verbundschichtmaterialien wurden hinsichtlich ihrer Kälteflexibilität, ihrer Abriebbeständigkeit und ihres Gehaltes an flüchtigen toxischen Substanzen untersucht. Dazu wurden die folgenden Prüfmethoden angewendet:
- Flexibilität bzw. Kälteflexibilität gemäß der Ballyfexprüfung (DIN 53351 (2003)) bei +20 und -10 °C mit Bestimmung der Zyklen ohne sichtbare Beschädigungen an der Oberfläche, d.h. bei der maximal die Note 1 oder 2 (Benotung nach DIN 16922) erreicht wird.
- Abriebbeständigkeit in der Sattelabriebprüfung (GMW 14125-Coding G): Bestimmung der Hübe ohne Beschädigung der Oberfläche. Die Sattelabriebprüfung simuliert in einer erfahrungsgemäß sehr guten Weise die Abriebbelastung, der ein Automobilsitz während seiner Lebenszeit ausgesetzt ist. Widersteht ein Bezugsmaterial einer Belastung von mindestens 4000 Hüben, wird von einer ausreichenden Abriebbeständigkeit über die automobile Lebensdauer ausgegangen.
- Bestimmung der flüchtigen toxischen Substanzen: Nachweis über Einzelstoffanalyse in der Prüfung nach VDA 278 (VOC- und Fog-Wert). Es dürfen keine als toxisch oder als CMR-Stoff angesehenen Substanzen in einer Menge größer oder gleich 1 ppm detektierbar sein (CMR = carcinogener, mutagener oder reproduktionstoxischer Stoff, eingeteilt in Kategorien von 1 bis 3 je nach nachgewiesener Schädlichkeit).

Die Ergebnisse sind in der Tabelle 1 dargestellt.

**Tabelle 1**

| | Ballyflexprüfung, Zyklen ohne Beschädigung bei 20 °C | Ballyflexprüfung, Zyklen ohne Beschädigung bei -10 °C | Sattelabriebprüfung, Hübe ohne Beschädigung | nachgewiesene toxische Substanzen > 1 ppm |
|---|---|---|---|---|
| **Vgl.-beispiel 1** | 100000 - 200000 | 25000 | 3500 | Toluol |
| **Vgl.-beispiel 2** | 100000 - 200000 | 20000 | 4000 | Butanonoxim |
| **Vgl.-beispiel 3** | 2500 | 500 | >7000 | keine |
| **Vgl.-beispiel 4** | 5000 | < 1250 | 6000 | keine |
| **Beispiel 1** | > 500000 | 200000 | >7000 | keine |
| **Beispiel 2** | >500000 | 200000 | >7000 | keine |

Aus der Tabelle 1 wird ersichtlich, dass mit den Verbundschichtmaterialien gemäß den Vergleichsbeispielen zwar oft noch eine relativ hohe Abriebbeständigkeit erzielt werden kann, die Flexibilität und besonders die Kälteflexibilität der Vergleichsbeispiele in keinen Fall die ausreichend ist. Es wird von den Automobilherstellern beispielsweise ein Wert von zumindest 30000 - 50000 Zyklen ohne Beschädigung bei -10 °C in der Ballyflexprüfung gefordert. Einzig die erfindungsgemäßen Beispiele 1 und 2 zeigen eine besonders hohe Kälteflexibilität bei sehr hoher Abriebbeständigkeit, wobei gleichzeitig keine flüchtigen toxischen Substanzen nachgewiesen werden konnten.

## Patentansprüche

1. Verbundschichtmaterial, aufweisend zumindest folgende Schichten:
- eine textile Trägerschicht (5),
- eine mit der textilen Trägerschicht (5) verbundene Kaschierschicht (4),
- eine Polyurethanzwischenschicht (3) auf Basis eines unblockierten High-Solid-Polyurethansystems und
- eine Polyurethandeckschicht (2), **dadurch gekennzeichnet, dass** die Polyurethandeckschicht (2) auf einer lösemittelfreien, wässrigen Polyurethandispersion, die im dispergierten Polymer zumindest partiell Polyethergruppen enthält, basiert.

2. Verbundschichtmaterial nach Anspruch 1, **dadurch gekennzeichnet, dass** die Polyurethandeckschicht (2) zumindest teilweise auf einer aliphatischen Polycarbonatesterpolyetherpolyurethan-Dispersion basiert.

3. Verbundschichtmaterial nach zumindest einem der vorhergehenden Ansprüche, **dadurch gekennzeichnet, dass** die Kaschierschicht (4) und/oder die Polyurethanzwischenschicht (3) auf im Wesentlichen lösemittelfreien Ausgangssubstanzen basieren.

4. Verbundschichtmaterial nach zumindest einem der vorhergehenden Ansprüche, **dadurch gekennzeichnet, dass** die Polyurethanzwischenschicht (3) geschäumt ist.

5. Verbundschichtmaterial nach zumindest einem der vorhergehenden Ansprüche, **dadurch gekennzeichnet, dass** für die Polyurethanzwischenschicht (3) Isocyanat-Präpolymere eingesetzt werden.

6. Verbundschichtmaterial nach zumindest einem der vorhergehenden Ansprüche, **dadurch gekennzeichnet, dass** die textile Trägerschicht (5) flammgeschützte Textilien enthält.

7. Verbundschichtmaterial nach zumindest einem der vorhergehenden Ansprüche, **dadurch gekennzeichnet, dass** es auf der Polyurethandeckschicht (2) nach außen weisend weitere Lackschichten (1) aufweist.

8. Verbundschichtmaterial nach Anspruch 7, **dadurch gekennzeichnet, dass** zumindest eine der Lackschichten (1) vernetzt ist.

9. Verbundschichtmaterial nach zumindest einem der vorhergehenden Ansprüche, **dadurch gekennzeichnet, dass** die einzelnen Schichten folgende Schichtdicken aufweisen:
Kaschierschicht (4): 1 bis 400 µm
Polyurethanzwischenschicht (3): 50 bis 1000 µm
Polyurethandeckschicht (2): 10 bis 200 µm
Lackschicht (1): 1 bis 100 µm

10. Verfahren zur Herstellung des Verbundschichtmaterials nach Anspruch 1 durch ein Umkehrbeschichtungsverfahren.

11. Verwendung des Verbundschichtmaterials nach Anspruch 1 als dekorative Innenraummaterialien, insbesondere als oberflächenstrukturierte Bezugsmaterialien.

## Claims

1. Composite layer material, having at least the following layers:
- a textile backing layer (5),
- bonded to the textile backing layer (5), a lamination layer (4),
- an intermediate polyurethane layer (3) based on an unblocked high-solid polyurethane system and
- an outer polyurethane layer (2), **characterized in that** the outer polyurethane layer (2) is based on a solvent-free, aqueous polyurethane dispersion which, in the dispersed polymer, at least to some extent comprises polyether groups.

2. Composite layer material according to Claim 1, **characterized in that** the outer polyurethane layer (2) is based at least to some extent on an aliphatic polycarbonate-ester-polyether-polyurethane dispersion.

3. Composite layer material according to at least one of the preceding claims, **characterized in that** the lamination layer (4) and/or the intermediate polyurethane layer (3) is/are based on starting substances that are in essence solvent-free.

4. Composite layer material according to at least one of the preceding claims, **characterized in that** the intermediate polyurethane layer (3) has been foamed.

5. Composite layer material according to at least one of the preceding claims, **characterized in that** isocyanate prepolymers are used for the intermediate polyurethane layer (3).

6. Composite layer material according to at least one of the preceding claims, **characterized in that** the textile backing layer (5) comprises flame-retardant textiles.

7. Composite layer material according to at least one of the preceding claims, **characterized in that** it has, on the outer polyurethane layer (2), further lacquer layers (1) facing outwards.

8. Composite layer material according to Claim 7, **characterized in that** at least one of the lacquer layers (1) has been crosslinked.

9. Composite layer material according to at least one of the preceding claims, **characterized in that** the individual layers have the following layer thicknesses:
lamination layer (4): 1 to 400 µm
intermediate polyurethane layer (3): 50 to 1000 µm
outer polyurethane layer (2): 10 to 200 µm
lacquer layer (1): 1 to 100 µm.

10. Process of the production of the composite layer material according to Claim 1 by a transfer coating process.

11. Use of the composite layer material according to Claim 1 as decorative interior material, in particular as surface-structured covering material.

## Revendications

1. Matériau stratifié composite, présentant au moins les couches suivantes :
- une couche de support textile (5),
- une couche de masquage (4) reliée à la couche de support textile (5),
- une couche intermédiaire (3) de polyuréthane à base d'un système de polyuréthane non bloqué à haute teneur en solides et
- une couche de revêtement (2) de polyuréthane, **caractérisé en ce que** la couche de revêtement (2) de polyuréthane est à base d'une dispersion aqueuse de polyuréthane exempte de solvant, qui contient dans le polymère dispersé au moins partiellement des groupes polyéther.

2. Matériau stratifié composite selon la revendication 1, **caractérisé en ce que** la couche de revêtement (2) de polyuréthane est au moins partiellement à base d'une dispersion de polycarbonateesterpolyétherpolyuréthane aliphatique.

3. Matériau stratifié composite selon au moins l'une des revendications précédentes, **caractérisé en ce que** la couche de masquage (4) et/ou la couche intermédiaire (3) de polyuréthane sont essentiellement à base de substances de départ exemptes de solvant.

4. Matériau stratifié composite selon au moins l'une des revendications précédentes, **caractérisé en ce que** la couche intermédiaire (3) de polyuréthane est moussée.

5. Matériau stratifié composite selon au moins l'une des revendications précédentes, **caractérisé en ce que** des prépolymères d'isocyanate sont utilisés pour la couche intermédiaire (3) de polyuréthane.

6. Matériau stratifié composite selon au moins l'une des revendications précédentes, **caractérisé en ce que** la couche de support textile (5) contient des textiles ignifugés.

7. Matériau stratifié composite selon au moins l'une des revendications précédentes, **caractérisé en ce qu'**il présente, sur la couche de revêtement (2) de polyuréthane, des couches de laque (1) supplémentaires orientées vers l'extérieur.

8. Matériau stratifié composite selon la revendication 7, **caractérisé en ce qu'**au moins l'une des couches de laque (1) est réticulée.

9. Matériau stratifié composite selon au moins l'une des revendications précédentes, **caractérisé en ce que** les couches individuelles présentent les épaisseurs de couches suivantes :
couche de masquage (4) : 1 à 400 µm
couche intermédiaire (3) de polyuréthane : 50 à 1 000 µm
couche de revêtement (2) de polyuréthane : 10 à 200 µm
couche de laque (1) : 1 à 100 µm.

10. Procédé pour la préparation du matériau stratifié composite selon la revendication 1 par un procédé de revêtement par inversion.

11. Utilisation du matériau stratifié composite selon la revendication 1 en tant que matériaux d'espace intérieur décoratifs, en particulier en tant que matériaux de couverture structurés en surface.
